# EUROPÄISCHE PATENTSCHRIFT

(11) **EP 2 269 896 B1**
(45) Veröffentlichungstag und Bekanntmachung des Hinweises auf die Patenterteilung: **18.03.2015**
(21) Anmeldenummer: 10167191.5
(22) Anmeldetag: 24.06.2010
(51) Int. Cl.: B62D 33/06

(54) **Rahmenkonstruktion**
Frame construction
Construction de cadre

(30) Priorität: 30.06.2009 DE 102009027334
(43) Veröffentlichungstag der Anmeldung: 05.01.2011
(73) Patentinhaber: DEERE & COMPANY, Moline, Illinois 61265-8098 (US)
(72) Erfinder: Höfle, Jörg Jens, 64342, Seeheim-Jugenheim (DE); Kasper Dr., Jürgen, 67065, Ludwigshafen (DE)
(74) Vertreter: Reichert, Christian

(56) Entgegenhaltungen:
- EP-A2- 1 304 281
- DE-U1- 9 104 258
- GB-A- 2 446 908
- US-A- 4 082 343
- US-A- 4 702 516
- US-A1- 2005 057 077
- US-A1- 2009 115 225
- US-B1- 6 189 955

## Beschreibung

Die Erfindung betrifft eine Rahmenkonstruktion für eine Fahrzeugkabine, mit einem Grundrahmen, an den Grundrahmen befestigten Verbindungselementen, sowie an den Verbindungselementen befestigbaren Tragelementen, wobei an den Tragelementen Funktionsflächen zur Anbindung von Anbauteilen ausgebildet sind und die Funktionsflächen eine vorgegebene toleranzbehaftete räumliche Ausrichtung aufweisen.

Die GB 2 446 908 A offenbart eine Rahmenkonstruktion nach dem Oberbegriff des Anspruchs 1.

Im Stand der Technik sind Rahmenkonstruktionen aus dem Kabinenbau bekannt, insbesondere aus dem Kabinenbau für Baufahrzeuge oder landwirtschaftliche Fahrzeuge, bei denen die tragende Struktur oder ein Tragrahmen der Fahrzeugkabine als Schweißkonstruktion unter Verwendung von Stahlrohrprofilen ausgebildet ist. Derartige Schweißkonstruktionen werfen das Problem auf, dass der Tragrahmen beim Erwärmen während des Schweißprozesses sowie auch beim Abkühlen danach, aufgrund der hohen Wärmeeinbringung, einer unkontrollierbaren Verformung bzw. einem unkontrollierbarem Verzug ausgesetzt ist, so dass die Einhaltung von Maßtoleranzen oftmals schwierig ist bzw. Maßtoleranzen nicht eingehalten werden können und eine Nachbesserung des bereits verschweißten Tragrahmens erforderlich wird, damit die an den Tragrahmen zu befestigenden Fahrzeugkabinenanbauteile, die prozessbedingt eine gewisse Toleranzempfindlichkeit besitzen, maßgenau angebracht werden können. Derartige Anbauteile können innere und äußere Verkleidungselemente, Türen, Verglasungen, Dichtungen etc. darstellen. So können aufgrund des Verzugs des Tragrahmens Probleme hinsichtlich einer prozesssicheren Handhabung der von dem Tragrahmen zu übernehmenden toleranzempfindlichen Funktionen auftreten, wie z.B. die Bereitstellung einer positionsgenauen Anbindungsstelle für ein Türscharnier, einer maßgenauen Klebeflächengeometrie für das Verkleben von Anbindungsstelle für ein Türscharnier, einer maßgenauen Klebeflächengeometrie für das Verkleben von Verglasungen, einer maßgenauen Dichtfläche für Türen und Scheiben oder eine positionsgenaue Anbindungsstelle für eine Dachstruktur oder für eine Kabinenverkleidung.

EP 1 304 281 A2 offenbart ein Fahrzeug mit einer an Fahrzeugsäulen eines Grundrahmens angeordneten Verstärkung. Die Verstärkung besteht aus einem Verstärkungsrohr, welches über Befestigungskonsolen und Ausgleichselemente zum Ausgleich von konstruktionsbedingten Toleranzen des Verstärkungsrohrs an die Fahrzeugsäulen befestigt wird. Toleranzabweichungen bei der Konstruktion des Grundrahmens können hierdurch nicht ausgeglichen werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine Rahmenkonstruktion der eingangs genannten Art derart ausgebildet, dass die Tragelemente gegenüber den an den Grundrahmen befestigten Verbindungselementen derart ausrichtbar und positionierbar sind, dass aufgrund einer Konstruktionsweise (beispielsweise Verschweißen) des Grundrahmens hervorgerufene Toleranzabweichungen durch entsprechende Ausrichtung und Positionierung der Tragelemente gegenüber den Verbindungselementen ausgleichbar sind. Die Verbindungselemente und die Tragelemente werden unabhängig von der eigentlichen Schweißfertigung des Grundrahmens an dem Grundrahmen positioniert, so dass der beim Verschweißen des Grundrahmens entstehende Rahmenverzug bei der Positionierung der Tragelemente optimal ausgeglichen werden kann. Dabei können die Verbindungselemente, vorzugsweise zeitgleich, zusammen mit den Tragelemente am Grundrahmen an vorgesehenen bzw. vorbestimmten Positionen angeschweißt oder auf eine andere Art an diesem befestigt werden. Dadurch können die Tragelemente in Bezug auf eine vorgegebene Raumgeometrie (Randgeometrie bzw. Ausrichtung der Funktionsflächen der Tragelemente in einer vorgegebenen Raumgeometrie) exakt ausgerichtet und an den zuvor geschweißten Grundrahmen positionsgenau befestigt werden. Der vorgenannte Fertigungsablauf kann dabei auch in Abhängigkeit der vorgegebenen Raumgeometrie bzw. Bauteilgeometrie nicht zeitgleich sondern sequenziell erfolgen.

Der Grundrahmen umfasst mehreren miteinander verschweißte oder verklebte Stahlprofile, wobei der Grundrahmen eine massive Grundkonstruktion darstellt, durch welche sowohl statische als auch dynamische sicherheitsrelevante Kräfte am Fahrzeug aufnehmbar sind. So wird beispielsweise die Profilstärke bzw. -dicke derart bemessen, dass bei einem Überschlag des Fahrzeugs ein mehrfaches Fahrzeuggewicht durch die Grundrahmenkonstruktion aufgenommen werden kann.

Der Grundrahmen kann als Rohrprofil ausgebildete Profile, vorzugsweise Stahlprofile umfassen. Rohrprofile können gegenüber anderen, beispielsweise viereckigen Profilformen, Vorteile bei der Formgebung in einem Biegeprozess und/oder beim Zusammenfügen in einem Schweißprozess (oder einem anderen Fügeprozess, beispielsweise Verkleben) aufweisen, da Rohrprofile aufgrund ihrer gleichförmigen Außenfläche unempfindlich gegenüber Verwindungen sind, so dass beim Biegeprozess und/oder auch beim Zusammenfügen der Profile im wesentlichen keine Rücksicht auf die Ausrichtung der Außenfläche genommen werden muss. Eine zylindrische Außenfläche eines Rohrprofils kann jedoch gegenüber einer flächigen Außenseite eines Rechteckprofils Nachteile bei einer toleranzgenauen Ausrichtung, Positionierung und/oder Befestigung von Bauteilen aufweisen, sofern die Außenfläche direkt als Bezugs- und Verbindungsfläche dient, weshalb herkömmlicher Weise oftmals auf die Verwendung von Rohrprofilen für Konstruktionen mit toleranzgenauen Bauteilpositionierungen und Bauteilverbindungen verzichtet wurde. Bei einer erfindungsgemäßen Rahmenkonstruktion können derartige Aspekte außer Acht gelassen werden, so dass bei der Konstruktion des Grundrahmens sowohl Rohrprofile zylindrischen bzw. kreisförmigen als auch viereckigen Querschnitts verwendbar sind, da hier die toleranzgenaue Ausrichtung, Positionierung und/oder Befestigung von Bauteilen ausschließlich in Kombination der Verbindungselemente mit den Tragelementen erfolgt und man nicht in der üblichen Weise an die Form der Außenfläche des Profils gebunden ist. Auch ist die Verwendung von Profilen gemischten Querschnitts unproblematisch, so dass in einer Konstruktion Profile unterschiedlicher Form und unterschiedlichen Querschnitts problemlos miteinander kombinierbar sind. Es sei darauf hingewiesen, dass auch Profile anderen Querschnitts in gleicher Weise verwendbar sind, beispielsweise L-, I-, T-, U- oder auch ovalförmige Profile.

Der Grundrahmen kann beispielsweise als Grundrahmen einer Fahrzeugkabine ausgebildet sein, wobei die Tragelemente auf einer Außenseite des Grundrahmens angeordnet sind. Wie schon erwähnt, wird durch den Grundrahmen der Großteil der auf die Rahmenkonstruktion wirkenden Kräfte aufgenommen. Die Tragelemente und die Verbindungselemente nehmen dabei nur einen sehr geringen Anteil, im wesentlichen nur das Eigengewicht der an ihnen befestigten Außenteile der Fahrzeugkabine, wie Karosserieteile, Verkleidungen, Türen, Scheiben etc., auf. Eine derartige Rahmenkonstruktion ist jedoch auf den Einsatz für Fahrzeugkabinen nicht beschränkt. Der Grundrahmen umfasst in Bezug auf die Ausrichtung der Fahrzeugkabine vordere und/oder hintere sich vertikal erstreckende Profilpfosten, an denen die Tragelemente befestigt sind. Neben einer geschlossenen Bauweise mit einem Fahrzeugkabinendach, zwei vorderen und zwei hinteren Pfosten ist auch eine offene oder teilweise offene Bauweise der Fahrzeugkabine möglich, so dass die Fahrzeugkabine ein frei tragendes Dach aufweist, welches nur von hinteren oder vorderen Pfosten getragen wird. auch die Verwendung einer erfindungsgemäßen Rahmenkonstruktion als sogenanntes Roll-Over-Protection-System (ROPS) ist denkbar.

Die Tragelemente weisen Funktionsflächen auf, die als Klebeflächen, Dichtflächen, Positionierflächen oder Türscharnieranbindungsflächen ausgebildet sein können und somit mit einer hohen Positioniertoleranz behaftet sind. Abweichungen, die außerhalb des vorgegebenen Toleranzbereiches liegen, können zu Undichtigkeiten oder Funktionsstörungen bei der Betätigung von Türen oder Fenstern führen. Ferner können auch Funktionsstörungen bei Klebeflächen auftreten, so dass beispielsweise eine Klebeverbindung fehlerhaft ausgeführt wird. Gleiches gilt für Dicht- bzw. Dichtungsflächen, die einem vorgegebenen Toleranzmaß nicht genügen. Des Weiteren können Montageprobleme in der Serienfertigung auftreten.

Die Tragelemente und/oder die Verbindungselemente sind als umgeformte Stahlbleche ausgebildet, wobei die Materialstärke bzw. -dicke der Tragelemente geringer ausgebildet ist als die der Stahlprofile des Grundrahmens. Dadurch, dass eine geringere Materialstärke bzw. -dicke zu verarbeiten ist, insbesondere miteinander zu verbinden ist, können in einem Schweißprozess geringere Wärmeenergien eingebracht werden, um die Teile miteinander zu verschweißen. Dadurch wird auch der beim Schweißen entstehende Verzug beim Erhitzen und Abkühlen der miteinander verschweißten Teile reduziert. Eine höhere Formgenauigkeit und dadurch auch eine höhere Toleranzgenauigkeit ist die Folge. Somit ist ein bei der Schweißkonstruktion des Grundrahmens entstehender Rahmenverzug durch das Anbringen der Verbindungs- und Tragelemente bzw. durch deren exakte Positionierung ausgleichbar, ohne dass ein weiterer übermäßiger Verzug der miteinander verschweißten Verbindungs- und Tragelemente zu Toleranzfehlern führt.

Die Tragelemente sind mit Öffnungen oder Aussparungen versehen, durch welche sich die Verbindungselemente wenigstens teilweise erstrecken. Die Position der Tragelemente bzw. der Öffnungen der Tragelemente können somit in Bezug auf die Verbindungselemente variieren. So werden die Tragelemente vorzugsweise zusammen mit den Verbindungselementen nach Bedarf entsprechend der vorgegebenen Raumgeometrie ausgerichtet, wobei die Öffnungen der Tragelemente derart ausgebildet sind, dass eine maximal zu erwartende Toleranzabweichung des Grundrahmens durch entsprechende Positionierung der Öffnungen gegenüber den Verbindungselementen ausgleichbar ist, und in einem weiteren Schritt mit den Verbindungselementen verschweißt bzw. verbunden. Die Verbindungselemente dienen dabei als Distanzhalter zwischen Grundrahmen und Tragelement. Je nach Rahmenverzug am Grundrahmen können einzelne Bereiche am Tragelement unterschiedlich nah oder fern zum entsprechenden Grundrahmenprofil positioniert werden, so dass Abstandsunterschiede zwischen Tragrahmen und Grundrahmen an mehreren Positionen entlang eines Grundrahmenprofils einstellbar sind, wobei ein Toleranzausgleich bzw. eine Abstandskorrektur in Bezug auf mehrere Freiheitsgrade möglich wird.

Die Verbindungselemente können an den Grundrahmen angeschweißt oder beispielsweise auch angeklebt sein, wobei auch andere Befestigungsformen denkbar sind. In gleicher oder ähnlicher Weise können auch die Tragelemente an die Verbindungselemente angeschweißt oder mit diesen verklebt werden.

Die an einem Profilpfosten angeordneten Tragelemente können einteilig ausgebildet sein, so dass sie sich über die gesamte Länge des Profilpfostens erstrecken. Dabei sind mehrere Verbindungselemente über die Länge der Profilpfosten verteilt angeordnet, die mit entsprechenden über die Länge der Tragelemente verteilten Öffnungen an den Tragelementen korrespondieren. Es ist jedoch auch möglich, die Tragelemente an einem Pfosten mehrteilig auszuführen.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Seitenansicht eines landwirtschaftlichen Fahrzeugs,
- Fig. 2: eine schematische perspektivische Ansicht einer erfindungsgemäßen Rahmenkonstruktion für eine Fahrzeugkabine eines Fahrzeugs aus Figur 1,
- Fig. 3: eine schematische perspektivische Rückansicht der Rahmenkonstruktion aus Figur 2 an einem hinteren Profilpfosten,
- Fig. 4: eine schematische perspektivische Seitenansicht der Rahmenkonstruktion aus Figur 2 an dem hinteren Profilpfosten aus Figur 3,
- Fig. 5: eine schematische Draufsicht auf die Rahmenkonstruktion aus Figur 2 an dem hinteren Profilpfosten aus den Figuren 3 und 4,
- Fig. 6: eine perspektivische Seitenansicht der Rahmenkonstruktion aus Figur 2 an einem vorderen Profilpfosten und
- Fig. 7: eine schematische Draufsicht auf die Rahmenkonstruktion aus Figur 2 an dem vorderen Profilpfosten aus Figur 6.

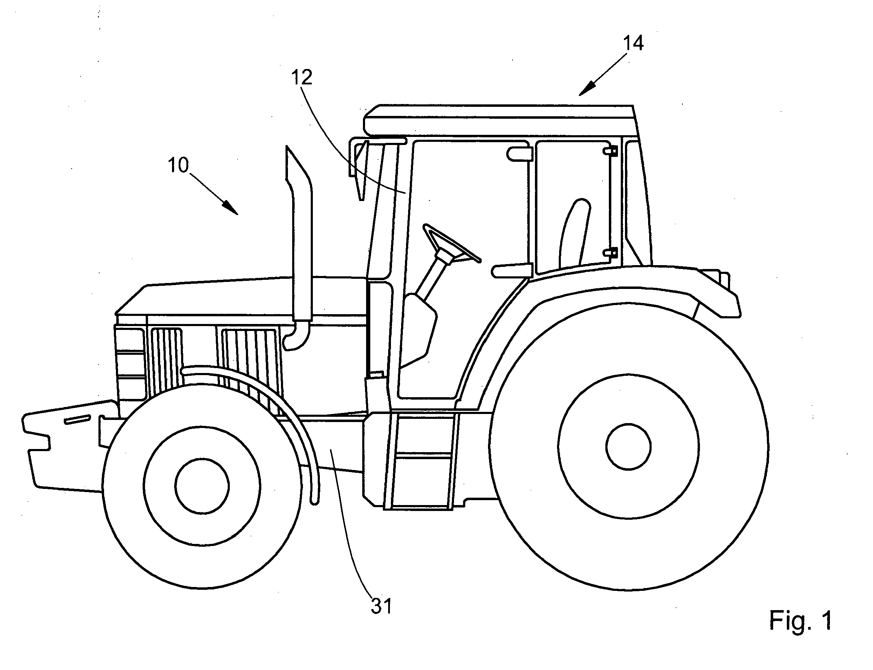

Figur 1 zeigt ein landwirtschaftliches Fahrzeug 10 in Form eines Traktors oder Schleppers, wobei die Erfindung nur beispielhaft anhand des abgebildeten Traktors oder Schleppers veranschaulicht werden soll und darauf nicht beschränkt ist. Sie ist vielmehr auch auf andere landwirtschaftliche Fahrzeuge (z.B. Erntemaschinen, Spritzmaschinen, Ladefahrzeuge etc.) und auf Fahrzeuge im Bau- (z. B. Radlader, Löffelbagger, Bagger etc.) und Forstmaschinenbereich (z. B. Rückezugmaschinen) anwendbar.

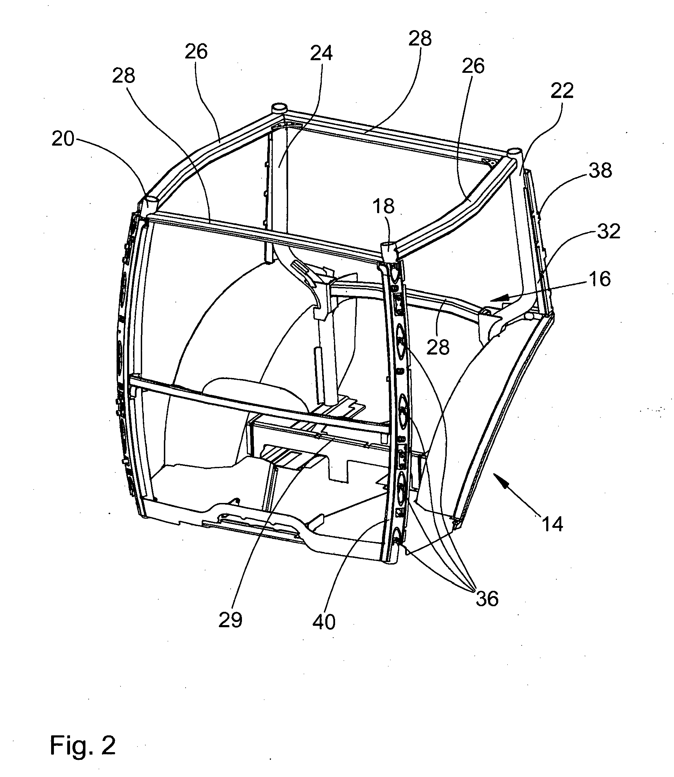

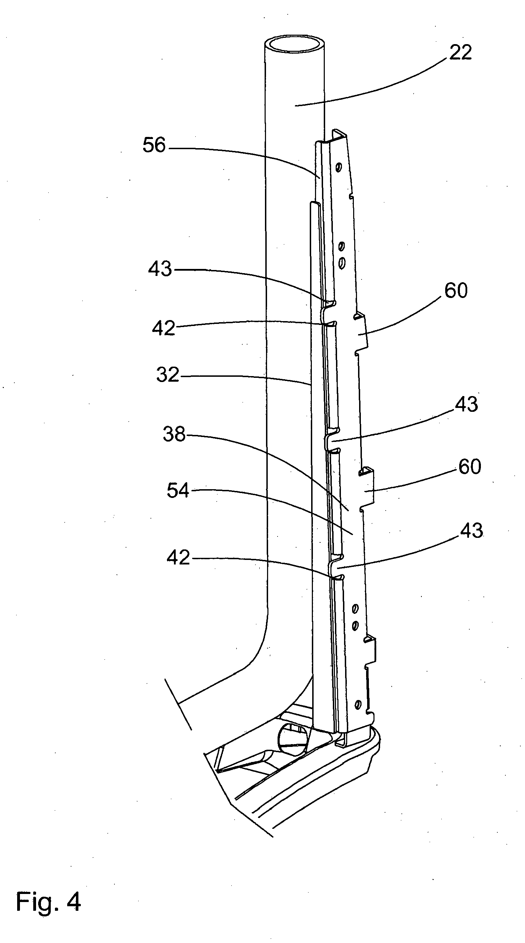

In Figur 1 zu erkennen, weist das Fahrzeug 10 eine Kabine 12 auf, die als Rahmenkonstruktion 14 gemäß den Figuren 2 bis 7 ausgebildet ist.

Die Rahmenkonstruktion 14 umfasst einen Grundrahmen 16, der in einer Schweißkonstruktion zusammen geschweißt ist (siehe insbesondere Figur 2). Die Schweißkonstruktion umfasst zwei vordere, sich im wesentlichen vertikal erstreckende Profilpfosten 18, 20, vorzugsweise Stahlprofile, sowie zwei hintere, sich im wesentlichen vertikal erstreckende Profilpfosten 22, 24, vorzugsweise Stehlprofile, wobei die Profilpfosten 18, 20, 22, 24 in einem vorangegangenen Biegeprozess einer vorgegebenen Formgebung unterzogen wurden.

Die Profilpfosten 18, 20, 22, 24 sind mit längs zur Fahrtrichtung des Fahrzeugs 10 verlaufenden Profilen 26 und mit quer zur Fahrtrichtung des Fahrzeugs 10 verlaufenden Profilen 28, vorzugsweise Stahlprofilen, verschweißt, die ebenfalls einer Formgebung durch Biegen unterzogen wurden. Alternativ können die Profile 18, 20, 22, 24, 26, 28 auch miteinander verklebt sein. Die Profilstärke bzw. -dicke der Profile 18, 20, 22, 24, 26, 28, insbesondere die der Profilpfosten 18, 20, 22, 24 ist derart bemessen, dass sie einer durch einen Unfall verursachten Belastung, die einem mehrfachen Gewicht des Fahrzeugs entsprechen kann, standhalten können. Beispielsweise ist bei einem Überschlag des Fahrzeugs weitestgehend gesichert, dass die Pfosten nicht einknicken. Über ein weiteres an einem unteren Bereich der Rahmenkonstruktion 14 quer zur Fahrtrichtung des Fahrzeugs 10 verlaufendes Profil 29 und einer Bodenplatte 30 ist die Rahmenkonstruktion 14 mit einem Rahmen 31 des Fahrzeugs 10 verbunden. In Bezug auf eine im Fahrzeugbau übliche Bezeichnung für Rahmenstrukturen von Karosserien und Kabinen sind die Profilpfosten 18, 20 mit einer A-Säule (vorderer Pfosten) und die Profilpfosten 22, 24 mit einer C-Säule (hinterer Pfosten) vergleichbar, wobei im vorliegenden Beispiel die Rahmenkonstruktion 14 diesbezüglich keine mittlere B-Säule umfasst.

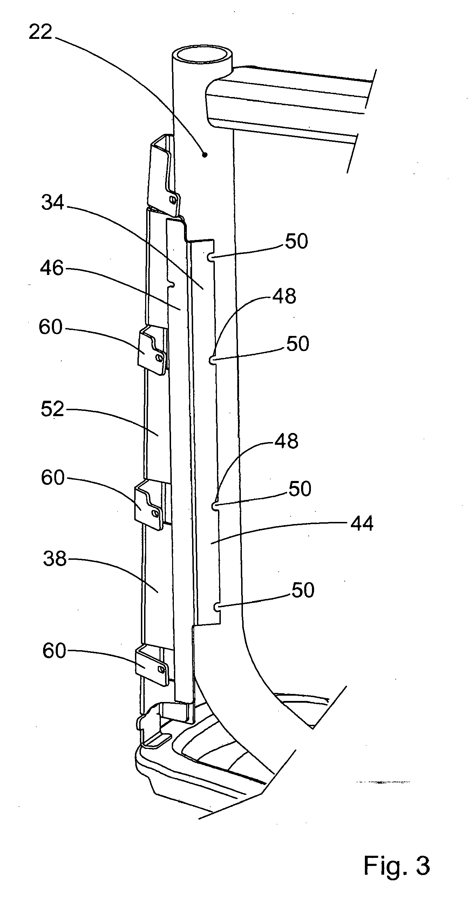

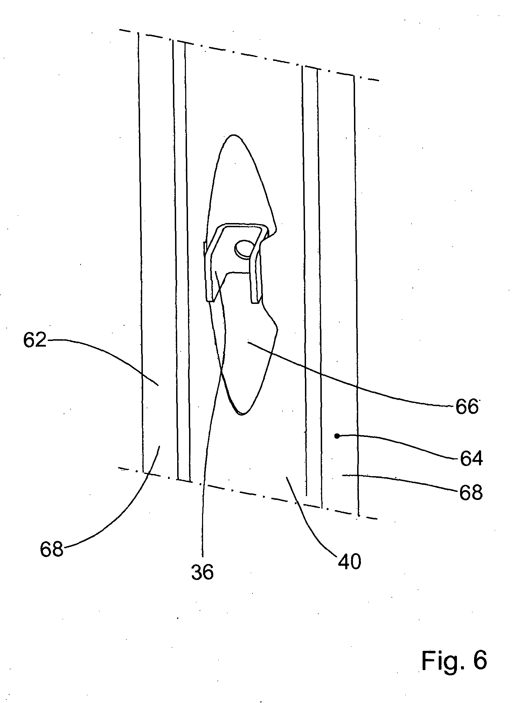

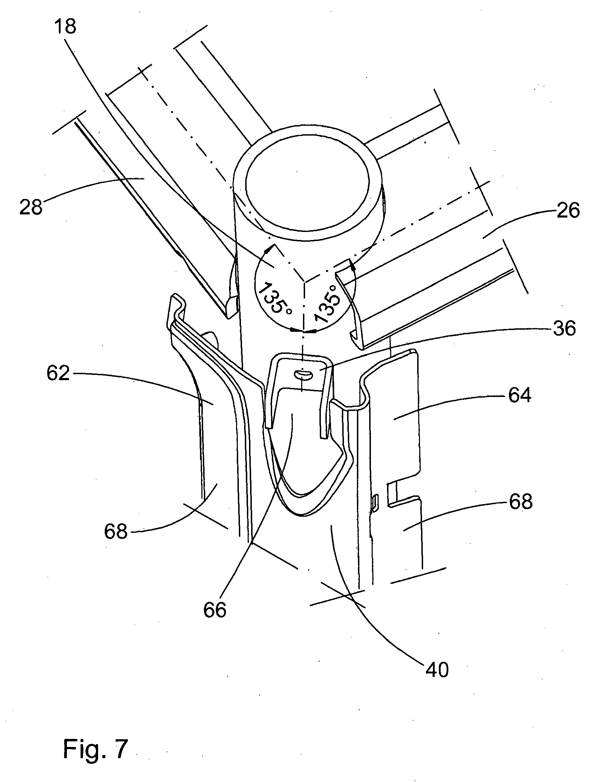

Die Rahmenkonstruktion 14 umfasst ferner Verbindungselemente 32, 34, 36, wobei die Verbindungselemente 32, 34 an den hinteren Profilpfosten 22, 24 und die Verbindungselemente 36 an den vorderen Profilpfosten 18, 20 angeordnet sind. Die Anordnung und Ausbildung der Verbindungselemente 32, 34 ist besonders deutlich anhand der Figuren 3 bis 5 (sowie Figur 2) und die der Verbindungselemente 36 anhand der Figuren 6 und 7 (sowie Figur 2) zu erkennen, wobei in Bezug auf die Rahmenkonstruktion 14 in den Figuren 3 bis 5 exemplarisch der in Fahrtrichtung hinten links angeordnete Profilpfosten 22 und in den Figuren 6 und 7 exemplarisch der in Fahrtrichtung vorne links angeordnete Profilpfosten dargestellt ist.

Die Rahmenkonstruktion 14 umfasst ferner Tragelemente 38, 40 wobei die Tragelemente 38 an den hinteren Profilpfosten 22, 24 und die Tragelemente 40 an den vorderen Profilpfosten 18, 20 angeordnet sind. Die Anordnung und Ausbildung der Tragelemente 38 ist entsprechend deutlich anhand der Figuren 3 bis 5 (sowie Figur 2) und die der Tragelemente 40 anhand der Figuren 6 und 7 (sowie Figur 2) zu erkennen.

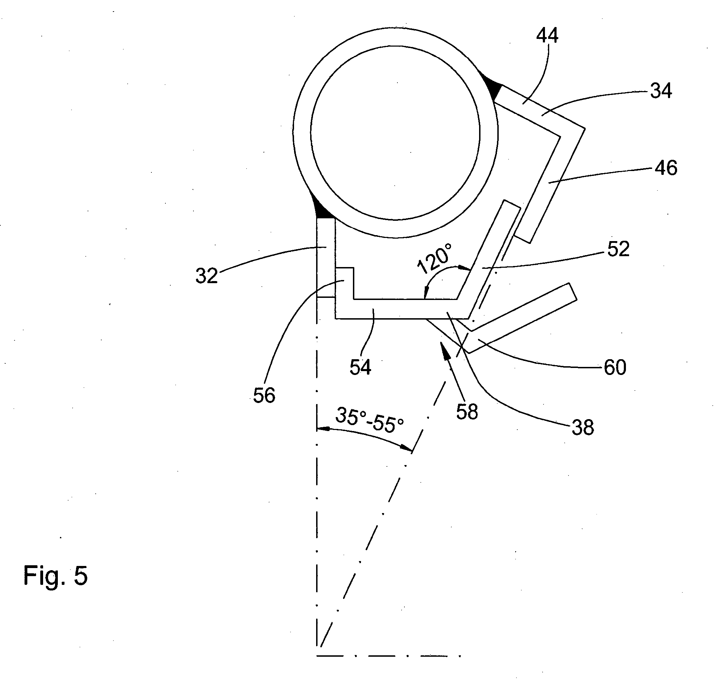

Somit umfasst die dargestellte Rahmenkonstruktion 14 zwei voneinander verschiedene Ausführungsbeispiele für die Anordnung und Ausbildung der Verbindungselemente 32, 34, 36 und der Tragelemente 38, 40, die im Folgenden näher beschrieben sind. Das Verbindungselement 32 ist in Form eines Flachstahls oder eines flachen Stahlblechs bzw. eines Stahlbands (siehe Querschnitt in Figur 5) ausgebildet und erstreckt sich in Richtung seiner Länge entlang der Länge eines oberen, außen liegenden Bereichs des Profilpfostens 22. Die Ausrichtung des Verbindungselements 32 erfolgt in Richtung seiner Breite im Wesentlichen quer zur Fahrtrichtung des Fahrzeugs 10, wobei das Verbindungselement 32 entlang seiner Längskante mit der in Bezug auf die Rahmenkonstruktion 14 nach außen und seitlich zum Fahrzeug 10 gerichteten Fläche des Profilpfostens 22 verschweißt oder verklebt ist. An den Längsseiten des Tragelements 38 und auch des Verbindungselements 32 können gegebenenfalls auf die Länge verteilte Einkerbungen oder Aussparungen 42 vorgesehen werden, die als Positionierhilfe der Elmente 32, 38 zueinander dienen, indem sie ineinander in Eingriff bringbar sind.

Das andere am hinteren Profilpfosten 22 angeordnete Verbindungselement 34 ist in Form eines in seinem Breitenquerschnitt als L-Profil geformtes Stahlblech mit zwei in etwa 90° zueinander angeordneten Schenkeln 44, 46 (siehe Querschnitt in Figur 5, wobei die Winkelabmessungen nur beispielhaft auf 90° bemessen sind und selbstverständlich auch größer oder kleiner ausfallen können) ausgebildet und erstreckt sich in Richtung seiner Länge entlang der Länge des gleichen oberen und außen liegenden Bereichs des Profilpfostens 22, wobei einer der Schenkel 44 entlang seiner Längskante mit der in Bezug auf die Rahmenkonstruktion 14 nach außen und rückseitig zum Fahrzeug 10 gerichteten Fläche des Profilpfostens 22 derart verschweißt oder verklebt ist, dass der andere Schenkel 46 in etwa in einem Winkel von 35°-55° zur Ausrichtung des Verbindungselements 32 ausgerichtet ist (siehe Querschnittszeichnung mit Winkelangabe in Figur 5, wobei die Winkelabmessungen nur beispielhaft auf 35°-55° bemessen sind und selbstverständlich auch größer oder kleiner ausfallen können). An der mit dem Profilpfosten 22 verschweißten oder verklebten Längskante des Verbindungselements 34 bzw. des Schenkels 44 könnten gegebenenfalls Einkerbungen oder Aussparungen 48 vorgesehen sein, die als Positionierhilfe dienen, indem sie mit Erhebungen 50 in Eingriff bringbar sind, die an der hinteren Außenfläche des Profilpfostens 22 entsprechend ausgebildet sein könnten.

Wie in Figur 5 zu erkennen ist, ist das Tragelement 38 als ein sich entlang der Verbindungselemente 32, 34 erstreckendes Stahlprofil ausgebildet und weist zwei sich in Breitenrichtung erstreckende Schenkel 52, 54, die in einem Öffnungswinkel von in etwa 120° zueinander stehen (siehe Querschnittsansicht in Figur 5, , wobei die Winkelabmessungen nur beispielhaft auf 120° bemessen sind und selbstverständlich auch größer oder kleiner ausfallen können). Die Längskante des Schenkels 54 ist mit einer Bördelung 56 in etwa 90° zur Schenkelachse des Schenkels 54 versehen.

Wie in Figur 5 besonders gut zu erkennen ist, bilden das Verbindungselement 32 und der Schenkel 46 des Verbindungselements 34 eine sich in Längsrichtung des oberen, außen liegenden Bereichs des Profilpfostens 22 erstreckende Positionieröffnung 58, mittels der das Tragelement 38 positionierbar ist und an dem Schenkel 52 mit dem Schenkel 46 des Verbindungselements 34 bzw. an dem Schenkel 54 mit dem Verbindungselement 32 verbindbar, vorzugsweise verschweißbar oder verklebbar ist.

An dem Tragelement 38 sind mehrere über die Länge verteilte Funktionsflächen 60 ausgebildet, an die beispielsweise eine Kabinentür (nicht gezeigt) oder Verkleidungselemente anbringbar sind.

Die Positionieröffnung 58 zwischen den Verbindungselementen 32 und 34 ist derart bemessen, dass das Tragelement 38 innerhalb der Positionieröffnung 58 ausgerichtet werden kann, so dass ein vorhandener Verzug des Grundrahmens 16 bzw. Gesamtabweichungen gegenüber vorgegebenen Raumgeometriemaßen für die an dem Tragelement 38 ausgebildeten Funktionsflächen 60, die in dem in den Figuren 3 bis 5 dargestellten Ausführungsbeispiel als Türscharnieranbindungen ausgebildet sind, durch entsprechendes Positionieren des Tragelements 38 ausgeglichen werden kann. Die Materialstärken bzw. -dicken der Verbindungselemente 32, 34 und des Tragelements 38 sind deutlich geringer als die Wandstärken der Profile des Grundrahmens 16, so dass beim Verschweißen des Tragelements 38 mit den Verbindungselementen 32, 34 eine geringere Wärmeeinbringung erforderlich ist, wodurch ein Wärmeverzug der Verbindungselemente 32, 34 und des Tragelements 38 im Wesentlichen vermieden werden kann bzw. sich innerhalb der zugelassenen Toleranzen bewegt, so dass insgesamt die erforderlichen Raumgeometriemaße für die Funktionsflächen 60 durch entsprechendes Positionieren des Tragelements 38 leichter und präziser eingehalten bzw. erzielt werden können. Alternativ können die Verbindungselemente 32, 34 mit dem Tragelement 38 auch verklebt werden, so dass ohnehin kein Wärmeverzug eintritt.

Eine weitere Anordnung und Ausrichtung von Verbindungselementen 32, 34 und Tragelement 38 findet sich in entsprechender Weise an dem anderen hinteren Profilpfosten 24.

Die Verbindungselemente 36 des in den Figuren 6 und 7 dargestellten zweiten Ausführungsbeispiels sind aus Stahlblech geformte, U-Profile, die zueinander beabstandet entlang der Länge der Profilpfosten 18, 20 an einem außen liegenden Bereich der Profilpfosten 18, 20 angeordnet und mit dem Profilpfosten verschweißt oder verklebt sind. Die Verbindungselemente 36 sind derart angeordnet, dass die Schenkel der u-förmigen Verbindungselemente 36 nach außen gerichtet sind und sich in horizontaler Richtung gegenüberliegen, wobei die Ausrichtung derart gewählt ist, dass sich die Schenkel in etwa entlang der Winkelhalbierenden zwischen Front- und Seitenfläche der Fahrzeugkabine 12 erstrecken, also jeweils in etwa einen Winkel von 135° mit der Front- bzw. Seitenfläche einschließen (siehe Winkelangaben in Figur 7, wobei die Winkelabmessungen nur beispielhaft auf 135° bemessen sind und selbstverständlich auch größer oder kleiner ausfallen können).

Wie in Figur 6 und 7 zu erkennen ist, ist das Tragelement 40 als ein sich in seiner Länge entlang des Profilpfostens 18 erstreckendes Stahlprofil ausgebildet und weist zwei sich in Breitenrichtung erstreckende Schenkel 62, 64 auf die in einem Öffnungswinkel von in etwa 90° zueinander stehen (siehe Querschnittsansicht in Figur 7, wobei die Winkelabmessungen nur beispielhaft auf 90° bemessen sind und selbstverständlich auch größer oder kleiner ausfallen können). Die Längskante des Schenkels 62 ist mit einer Bördelung in etwa 90° zur Schenkelachse des Schenkels 62 versehen.

Entlang der Länge des Tragelements 40 sind zwischen den Schenkeln 62, 64, also im Eckbereich des Tragelements 40 bzw. in dem Bereich, in welchem die Schenkel 62, 64 aufeinander stoßen, ovalförmige Positionieröffnungen 66 ausgebildet, die in Anzahl und Anordnung denen der Verbindungselemente 36 entsprechen. Die Positionieröffnungen 66 weisen einen Breitendurchmesser auf, der in etwa dem Außenabstand der beiden Schenkel der Verbindungselemente 36 entspricht, so dass die Schenkel der Verbindungselemente 36 sich durch die Positionieröffnungen 66 erstrecken können.

Das Tragelement 40 ist derart positioniert, dass die Schenkel der Verbindungselemente 36 mit den Positionieröffnungen 66 in Eingriff gebracht werden, wobei je nach Ausrichtung des Tragelements 40 die Schenkel unterschiedlich weit durch die Positionieröffnung ragen können. Die Schenkel der Verbindungselemente 36 werden nach einer toleranzgenauen Ausrichtung und Anordnung des Tragelements 40 am Rand der Positionieröffnungen 66 mit dem Tragelement 40 verbunden, vorzugsweise verschweißt oder verklebt.

An dem Tragelement 40 sind sich entlang der Schenkel 62, 64 in Längsrichtung des Tragelements 40 erstreckende Funktionsflächen 68 in Form einer Klebefläche und/oder Dichtfläche ausgebildet, an die eine Verglasung (nicht gezeigt) für die Fahrzeugkabine 12 angeklebt werden bzw. die als Dichtfläche für eine Türdichtung einer Kabinentür (nicht gezeigt) dienen kann.

Die Positionieröffnungen 66 sowie die Form und Länge der Schenkel der Verbindungselemente 36 ist derart bemessen, dass das Tragelement 40 zum einen ausgerichtet werden kann und zum anderen gewährleistet ist, dass nach einer Ausrichtung des Tragelements 40 die Schenkel der Verbindungselemente 36, noch mit dem Rand der Positionieröffnungen 66 verbindbar sind. Die Ausrichtung erfolgt derart, dass ein vorhandener Verzug des Grundrahmens 16 bzw. Gesamtabweichungen gegenüber vorgegebenen Raumgeometriemaßen für die an dem Tragelement 40 ausgebildeten Funktionsflächen 66, die in dem in den Figuren 6 und 7 dargestellten Ausführungsbeispiel als Klebe- und/oder Dichtflächen ausgebildet sind, durch entsprechendes Positionieren des Tragelements 40 ausgeglichen werden kann. Die Materialstärken bzw. -dicken der Verbindungselemente 36 und des Tragelements 40 sind dabei deutlich geringer als die Wandstärken der Profile des Grundrahmens 16, so dass beim Verschweißen des Tragelements 40 mit den Verbindungselementen 36 eine geringere Wärmeeinbringung erforderlich ist, wodurch ein Wärmeverzug der Verbindungsteile 36 und des Tragelements 40 vermieden werden kann bzw. sich innerhalb der zugelassenen Toleranzen bewegt, so dass insgesamt die erforderlichen Raumgeometriemaße für die Funktionsflächen 66 durch entsprechendes Positionieren des Tragelements 40 leichter und präziser eingehalten bzw. erzielt werden können. Alternativ können die Verbindungselemente 36 mit dem Tragelement 40 auch verklebt werden, so dass ohnehin kein Wärmeverzug eintritt.

Eine weitere Anordnung und Ausrichtung von Verbindungselementen 36 und Tragelement 40 findet sich in entsprechender Weise an dem anderen vorderen Profilpfosten 20.

Auch wenn die Erfindung lediglich anhand von zwei Ausführungsbeispielen beschrieben wurde, erschließen sich für den Fachmann im Lichte der vorstehenden Beschreibung sowie der Zeichnungen viele verschiedenartige Alternativen, Modifikationen und Varianten, die unter die vorliegende Erfindung fallen. So können beispielsweise die Verbindungselemente 32, 34, 36 oder auch die Tragelemente 38, 40 anders geformt und anders miteinander verbunden sein. Die Positionieröffnungen 58, 66 und Verbindungsstellen können an anderen Positionen gelagert sein. Ferner können die Tragelemente 38, 40, sowie die Verbindungselemente 32, 34, anders als hier beispielhaft dargestellt, auch mehrteilig ausgebildet sein. Die als zylindrische Rohrprofile ausgebildeten ProfilpPfosten 18, 20, 22, 24 (A- und C-Säule) der Rahmenkonstruktion 14 können auch als andersförmige Rohrprofile oder sogar als offene Profile ausgebildet sein (z. B. als I-, T-, L-, U-Profile etc.).

## Patentansprüche

1. Rahmenkonstruktion für eine Fahrzeugkabine, mit einem mehrere miteinander verschweißte oder verklebte Stahlprofile (18, 20, 22, 24, 26, 28) umfassenden Grundrahmen (16), an dem Grundrahmen (16) befestigten Verbindungselementen (32, 34, 36), sowie an den Verbindungselementen (32, 34, 36) befestigbaren Tragelementen (38, 40), wobei an den Tragelementen (38, 40) Funktionsflächen (60, 68) zur Anbindung von Anbauteilen ausgebildet sind und die Funktionsflächen (60, 68) eine vorgegebene toleranzbehaftete räumliche Ausrichtung aufweisen, wobei die Tragelemente (38, 40) gegenüber den an dem Grundrahmen (16) befestigten Verbindungselementen (32, 34, 36) derart ausrichtbar und positionierbar sind, dass aufgrund einer Konstruktionsweise des Grundrahmens (16) hervorgerufene Toleranzabweichungen durch entsprechende Ausrichtung und Positionierung der Tragelemente (38, 40) gegenüber den Verbindungselementen (32, 34, 36) ausgleichbar sind, und wobei die Verbindungselemente (32, 34, 36) und/oder die Tragelemente (38, 40) als umgeformte Stahlbleche ausgebildet sind, **dadurch gekennzeichnet, dass** die Materialstärke der Verbindungselemente (32, 34, 36) und/oder der Tragelemente (38, 40) geringer ausgebildet ist als die der Stahlprofile (18, 20, 22, 24, 26, 28) des Grundrahmens (16).

2. Rahmenkonstruktion nach Anspruch 1, **dadurch gekennzeichnet, dass** der Grundrahmen mehrere als Rohrprofil ausgebildete Stahlprofile (18, 20, 22, 24, 26, 28) umfasst.

3. Rahmenkonstruktion nach Anspruch 1 oder 2, **dadurch gekennzeichnet, dass** der Grundrahmen (16) als Grundrahmen (16) einer Fahrzeugkabine (12) ausgebildet ist und die Tragelemente (38, 40) auf einer Außenseite des Grundrahmens (16) angeordnet sind.

4. Rahmenkonstruktion nach Anspruch 3, **dadurch gekennzeichnet, dass** der Grundrahmen (16) in Bezug auf die Ausrichtung der Fahrzeugkabine (12) vordere und/oder hintere sich vertikal erstreckende Profilpfosten (18, 20, 22, 24) umfasst, an denen die Tragelemente (38, 40) befestigt sind.

5. Rahmenkonstruktion nach einem der vorhergehenden Ansprüche, **dadurch gekennzeichnet, dass** die befestigten Tragelemente (38, 40) als Klebeflächen, Dichtflächen, Positionierflächen oder Türscharnieranbindungsflächen ausgebildete Funktionsflächen (60, 68) aufweisen.

6. Rahmenkonstruktion nach einem der vorhergehenden Ansprüche, **dadurch gekennzeichnet, dass** die Tragelemente (38, 40) mit Öffnungen (66) oder Aussparungen versehen sind, durch welche sich die Verbindungselemente (36) wenigstens teilweise erstrecken.

7. Rahmenkonstruktion nach einem der vorhergehenden Ansprüche, **dadurch gekennzeichnet, dass** die Verbindungselemente (32, 34, 36) an dem Grundrahmen (16) anschweißbar oder mit diesem verklebbar sind.

8. Rahmenkonstruktion nach einem der vorhergehenden Ansprüche, **dadurch gekennzeichnet, dass** die Tragelemente (38, 40) an die Verbindungselemente (32, 34, 36) anschweißbar oder mit diesen verklebbar sind.

9. Rahmenkonstruktion nach einem der vorhergehenden Ansprüche 4 bis 8, **dadurch gekennzeichnet, dass** die an einem Profilpfosten (18, 20, 22, 24) angeordneten Tragelemente (38, 40) einteilig ausgebildet sind.

## Claims

1. Frame construction for a vehicle cab, with a basic frame (16) comprising a plurality of steel profiles (18, 20, 22, 24, 26, 28) which are welded or adhesively bonded to one another, connecting elements (32, 34, 36) which are fastened to the basic frame (16), and supporting elements (38, 40) which are fastenable to the connecting elements (32, 34, 36), wherein functional surfaces (60, 68) for the connection of addon parts are formed on the supporting elements (38, 40), and the functional surfaces (60, 68) have a predetermined, three-dimensional alignment which is subject to manufacturing tolerances, wherein the supporting elements (38, 40) are alignable and positionable in relation to the connecting elements (32, 34, 36), which are fastened to the basic frame (16), in such a manner that tolerance deviations caused because of a design of the basic frame (16) can be compensated for by corresponding alignement and positioning of the supporting elements (38, 40) in relation to the connecting elements (32, 34, 36), and wherein the connecting elements (32, 34, 36) and/or the supporting elements (38, 40) are designed as deformed steel sheets, **characterized in that** the material thickness of the connecting elements (32, 34, 36) and/or of the supporting elements (38, 40) is designed to be smaller than that of the steel profiles (18, 20, 22, 24, 26, 28) of the basic frame (16).

2. Frame construction according to Claim 1, **characterized in that** the basic frame comprises a plurality of steel profiles (18, 20, 22, 24, 26, 28) designed as a tubular profile.

3. Frame construction according to Claim 1 or 2, **characterized in that** the basic frame (16) is designed as a basic frame (16) of a vehicle cab (12), and the supporting elements (38, 40) are arranged on an outer side of the basic frame (16).

4. Frame construction according to Claim 3, **characterized in that** the basic frame (16) comprises, with respect to the alignment of the vehicle cab (12), front and/or rear, vertically extending profile posts (18, 20, 22, 24) to which the supporting elements (38, 40) are fastened.

5. Frame construction according to one of the preceding claims, **characterized in that** the fastened supporting elements (38, 40) have functional surfaces (60, 68) designed as adhesive surfaces, sealing surfaces, positioning surfaces or door hinge connecting surfaces.

6. Frame construction according to one of the preceding claims, **characterized in that** the supporting elements (38, 40) are provided with openings (66) or cutouts through which the connecting elements (36) at least partially extend.

7. Frame construction according to one of the preceding claims, **characterized in that** the connecting elements (32, 34, 36) are weldable to the basic frame (16) or adhesively bondable thereto.

8. Frame construction according to one of the preceding claims, **characterized in that** the supporting elements (38, 40) are weldable to the connecting elements (32, 34, 36) or are adhesively bondable thereto.

9. Frame construction according to one of the preceding Claims 4 to 8, **characterized in that** the supporting elements (38, 40) arranged on a profile post (18, 20, 22, 24) are formed as a single part.

## Revendications

1. Construction de cadre pour une cabine de véhicule, comprenant un cadre de base (16) comprenant plusieurs profilés en acier (18, 20, 22, 24, 26, 28) soudés ou collés les uns aux autres, des éléments de liaison (32, 34, 36) fixés au cadre de base (16) ainsi que des éléments porteurs (38, 40) pouvant être fixés aux éléments de liaison (32, 34, 36), des surfaces fonctionnelles (60, 68) pour raccorder les éléments rapportés étant réalisées au niveau des éléments porteurs (38, 40) et les surfaces fonctionnelles (60, 68) présentant une orientation prédéfinie spatiale soumise à tolérances, les éléments porteurs (38, 40) pouvant être orientés et positionnés par rapport aux éléments de liaison (32, 34, 36) fixés au cadre de base (16) de telle sorte que des écarts de tolérances provoqués du fait d'un mode de construction du cadre de base (16) puissent être compensés par une orientation correspondante et un positionnement correspondant des éléments porteurs (38, 40) par rapport aux éléments de liaison (32, 34, 36), et les éléments de liaison (32, 34, 36) et/ou les éléments porteurs (38, 40) étant réalisés sous forme de tôles d'acier formées, **caractérisée en ce que** l'épaisseur de matériau des éléments de liaison (32, 34, 36) et/ou des éléments porteurs (38, 40) est inférieure à celle des profilés en acier (18, 20, 22, 24, 26, 28) du cadre de base (16).

2. Construction de cadre selon la revendication 1, **caractérisée en ce que** le cadre de base comprend plusieurs profilés en acier (18, 20, 22, 24, 26, 28) réalisés sous forme de profilé tubulaire.

3. Construction de cadre selon la revendication 1 ou 2, **caractérisée en ce que** le cadre de base (16) est réalisé sous forme de cadre de base (16) d'une cabine de véhicule (12) et les éléments porteurs (38, 40) sont disposés sur un côté extérieur du cadre de base (16).

4. Construction de cadre selon la revendication 3, **caractérisée en ce que** le cadre de base (16) comprend, par rapport à l'orientation de la cabine de véhicule (12), des montants profilés avant et/ou arrière s'étendant verticalement (18, 20, 22, 24) sur lesquels sont fixés les éléments porteurs (38, 40).

5. Construction de cadre selon l'une quelconque des revendications précédentes, **caractérisée en ce que** les éléments porteurs fixés (38, 40) présentent des surfaces fonctionnelles (60, 68) réalisées sous forme de surfaces de collage, surfaces d'étanchéité, surfaces de positionnement, ou surfaces de raccordement de charnière de porte.

6. Construction de cadre selon l'une quelconque des revendications précédentes, **caractérisée en ce que** les éléments porteurs (38, 40) sont pourvus d'ouvertures (66) ou d'évidements à travers lesquels s'étendent au moins en partie les éléments de liaison (36).

7. Construction de cadre selon l'une quelconque des revendications précédentes, **caractérisée en ce que** les éléments de liaison (32, 34, 36) peuvent être soudés au cadre de base (16) ou être collés à celui-ci.

8. Construction de cadre selon l'une quelconque des revendications précédentes, **caractérisée en ce que** les éléments porteurs (38, 40) peuvent être soudés aux éléments de liaison (32, 34, 36) ou être collés à ceux-ci.

9. Construction de cadre selon l'une quelconque des revendications 4 à 8, **caractérisée en ce que** les éléments porteurs (38, 40) disposés sur les montants profilés (18, 20, 22, 24) sont réalisés d'une seule pièce.
